# EUROPEAN PATENT SPECIFICATION

(11) **EP 3 047 644 B1**
(45) Date of publication and mention of the grant of the patent: **08.08.2018**
(21) Application number: 14767199.4
(22) Date of filing: 28.08.2014
(51) Int. Cl.: H04N 5/278, H04N 5/445, H04N 9/64, G11B 27/28

(54) **METHOD AND APPARATUS FOR GENERATING A TEXT COLOR FOR A GROUP OF IMAGES**
VERFAHREN UND VORRICHTUNG ZUR ERZEUGUNG EINER TEXTFARBE FÜR EINE GRUPPE VON BILDERN
PROCÉDÉ ET APPAREIL DE GÉNÉRATION D'UNE COULEUR DE TEXTE POUR UN GROUPE D'IMAGES

(30) Priority: 16.09.2013 US 201361878245 P; 27.05.2014 US 201462003281 P
(43) Date of publication of application: 27.07.2016
(73) Proprietor: Thomson Licensing, 92130 Issy-les-Moulineaux (FR)
(72) Inventor: VOSS, Neil, Norwalk, Connecticut 06854 (US)
(74) Representative: Vidon Brevets & Stratégie
(86) International application number: PCT/US2014/053251
(87) International publication number: WO 2015/038351

(56) References cited:
- EP-A1- 2 076 031
- KR-A- 20020 026 111
- US-A- 5 126 832

## Description

### BACKGROUND OF THE INVENTION

Portable electronic devices are becoming more ubiquitous. These devices, such as mobile phones, music players, cameras, tablets and the like often contain a combination of devices, thus rendering carrying multiple objects redundant. For example, current touch screen mobile phones, such as the Apple iPhone or Samsung Galaxy android phone contain video and still cameras, global positioning navigation system, internet browser, text and telephone, video and music player, and more. These devices are often enabled on multiple networks, such as WiFi, wired, and cellular, such as 3G, to transmit and receive data.

The quality of secondary features in portable electronics has been constantly improving. For example, early "camera phones" consisted of low resolution sensors with fixed focus lenses and no flash. Today, many mobile phones include full high definition video capabilities, editing and filtering tools, as well as high definition displays. With these improved capabilities, many users are using these devices as their primary photography devices. Hence, there is a demand for even more improved performance and professional grade embedded photography tools. Additionally, users wish to share their content with others in more ways that just printed photographs and do so easily. Users may upload content to a video storage site or a social media site, such as YouTube. However, users may wish to edit these photos before sharing and this editing ideally could be done on the mobile device. Users may wish to edit the length of a video, change color filters, brightness or other video effects. These features are not commonly available on mobile devices so users must first download the content to a computer to perform the editing. As this is often beyond either the skill level of the user, or requires too much time and effort to be practical, users often are dissuaded from sharing video content. These methods of sharing may include email, text, or social media websites, such as Facebook, twitter, YouTube or the like.

To alleviate some of the problems that exist with editing video and images on a device with limited user inputs some of the tasks may be automated by the device. These tasks may be automated according to user preferences, past user actions, or automated by the application. A problem arises when users wish to overlay captions on images, groups of images or videos. No one color is suitable for all images, groups of images and videos. When titles or text are overlaid on images, they typically have either a default color or the user selects the color. The default color may not be pleasing. The user selected color may not be the most pleasing and takes time for the user to set the color on each image. When multiple groups of images exist it may be desirable to have different color text or captions for each group of images. In video, colors change so users would have to change the caption color many times in a single video to ensure that that caption is viewable throughout the entire video. In practice, most systems use the default color text setting which is often not discernable from the image itself. It would be desirable to have a method of applying a caption overlaid on an image, group of images or a video without extensive user interaction.

EP2076031A1 discloses a method for displaying a menu on an image wherein the color of the menu is different from the color of the image and the color of the menu is changed dynamically.

US5126832 discloses a method for inserting character in video signals where the characters are in contrast with the color of the images.

### SUMMARY OF THE INVENTION

The invention, which is set out in the claims, relates to a method and apparatus for automatically grouping a set of images together and selecting a text color for overlay on the set of images for presentation on a media device. The system identifies a set of images to be grouped together and identifies the most prominent color in the group of images, finds the closest match to that color in a predetermined number of colors, and then uses the closest match color to color the text that is overlaid on the group of images.

### BRIEF DESCRIPTION OF THE DRAWINGS

These and other aspects, features and advantages of the present disclosure will be described or become apparent from the following detailed description of the preferred embodiments, which is to be read in connection with the accompanying drawings.

In the drawings, wherein like reference numerals denote similar elements throughout the views:
FIG. 1 shows a block diagram of an exemplary embodiment of mobile electronic device.
FIG. 2 shows an exemplary mobile device display having an active display according to the present disclosure.
FIG. 3 shows an exemplary process for image stabilization and reframing in accordance with the present disclosure.
FIG. 4 shows an exemplary mobile device display having a capture initialization according to the present disclosure.
FIG. 5 shows an exemplary process for initiating an image or video capture in accordance with the present disclosure.
FIG. 6 shows an exemplary embodiment of automatic video segmentation according to an aspect of the present disclosure.
FIG. 7 shows a method of segmenting a video in accordance with the present disclosure.
FIG 8 shows a light box application according to one aspect of the present disclosure.
FIG. 9 shows various exemplary operations that can performed within the light box application.
FIG. 10 shows an exemplary caption color generation application according to one aspect of the present disclosure.
FIG.11 shows a color selection chart according to an exemplary aspect of the present disclosure.
FIG. 12 shows exemplary groups of images according to one aspect of the present disclosure.
FIG. 13 shows an exemplary process for generating text colors for groups of images according to one aspect of the present disclosure.

### DETAILED DESCRIPTION OF THE PREFERRED EMBODIMENT

The examples set out herein illustrate preferred embodiments of the disclosure, and such examples are not to be construed as limiting the scope of the disclosure in any manner.

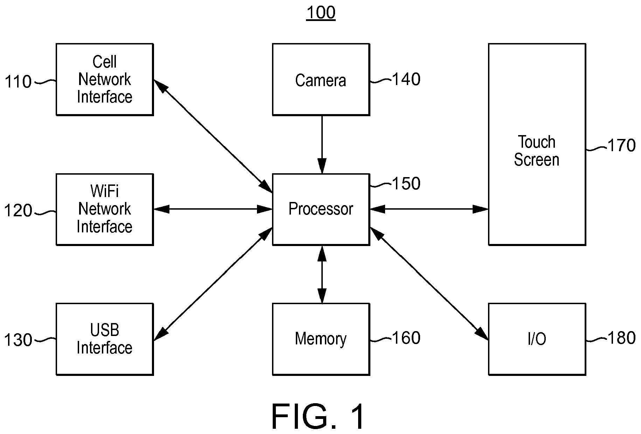

Referring to FIG. 1, a block diagram of an exemplary embodiment of mobile electronic device is shown. While the depicted mobile electronic device is a mobile phone 100, the disclosure may equally be implemented on any number of devices, such as music players, cameras, tablets, global positioning navigation systems, televisions, computer systems, set top boxes, game consoles, and the like. A mobile phone typically includes the ability to send and receive phone calls and text messages, interface with the Internet either through the cellular network or a local wireless network, take pictures and videos, play back audio and video content, and run applications such as word processing, programs, or video games. Many mobile phones include GPS and also include a touch screen panel as part of the user interface.

The mobile phone includes a main processor 150 that is coupled to each of the other major components. The main processor 150 may be a single processor or may be more than one communicatively coupled processor as known by one skilled in the art. The main processor 150, or processors, routes the information between the various components, such as the network interfaces 110 and 120, camera 140, touch screen 170, and other input/output I/O interfaces 180. The main processor 150 also processes audio and video content for play back either directly on the device or on an external device through the audio/video interface. The main processor 150 is operative to control the various sub devices, such as the camera 140, touch screen 170, and the USB interface 130. The main processor 150 is further operative to execute subroutines in the mobile phone used to manipulate data similar to a computer. For example, the main processor may be used to manipulate image files after a photo has been taken by the camera function 140. These manipulations may include cropping, compression, color and brightness adjustment, insertion of text, coloring of text, and the like.

The cell network interface 110 is controlled by the main processor 150 and is used to receive and transmit information over a cellular wireless network. This information may be encoded in various formats, such as time division multiple access (TDMA), code division multiple access (CDMA) or Orthogonal frequency-division multiplexing (OFDM). Information is transmitted and received from the device trough the cell network interface 110. The interface may consist of multiple antennas encoders, demodulators and the like used to encode and decode information into the appropriate formats for transmission. The cell network interface 110 may be used to facilitate voice or text transmissions, or transmit and receive information from the internet. The information may include video, audio, and/or images.

The wireless network interface 120, or wifi network interface, is used to transmit and receive information over a wifi network. This information can be encoded in various formats according to different wifi standards, such as 802.11 g, 802.11b, 802.11ac and the like. The interface may consist of multiple antennas encoders, demodulators and the like used to encode and decode information into the appropriate formats for transmission and decode information for demodulation. The wifi network interface 120 may be used to facilitate voice or text transmissions, or transmit and receive information from the internet. This information may include video, audio, and/or images.

The universal serial bus (USB) interface 130 is used to transmit and receive information over a wired link, typically to a computer or other USB enabled device. The USB interface 120 can be used to transmit and receive information, connect to the internet, transmit and receive voice and text calls, etc.. Additionally, the wired link may be used to connect the USB enabled device to another network using the mobile devices cell network interface 110 or the wifi network interface 120. The USB interface 130 can be used by the main processor 150 to send and receive configuration information to a computer.

A memory 160, or storage device, may be coupled to the main processor 150. The memory 160 may be used for storing specific information related to operation of the mobile device and needed by the main processor 150. The memory 160 may be used for storing audio, video, photos, or other data stored and retrieved by a user.

The input output (I/O) interface 180, includes buttons, a speaker/microphone for use with phone calls, audio recording and playback, or voice activation control. The mobile device may include a touch screen 170 coupled to the main processor 150 through a touch screen controller. The touch screen 170 may be either a single touch or multi touch screen using one or more of a capacitive and resistive touch sensor. The smartphone may also include additional user controls such as but not limited to an on/off button, an activation button, volume controls, ringer controls, and a multi-button keypad or keyboard

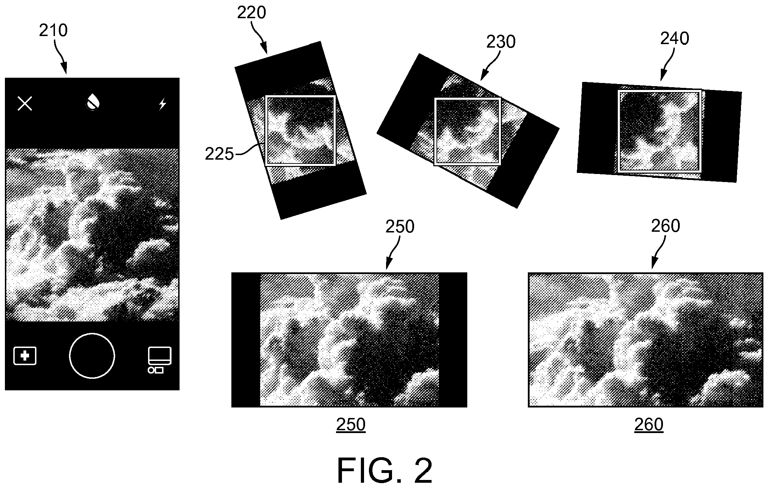

Turning now to FIG. 2, an exemplary mobile device display having an active display 200 according to the present disclosure is shown. The exemplary mobile device application is operative for allowing a user to record in any framing and freely rotate their device while shooting, visualizing the final output in an overlay on the device's viewfinder during shooting and ultimately correcting for their orientation in the final output.

According to the exemplary embodiment, when a user begins shooting the user's current orientation is taken into account and the vector of gravity based on the device's sensors is used to register a horizon. For each possible orientation, such as portrait 210, where the device's screen and related optical sensor is taller than wide, or landscape 250, where the device's screen and related optical sensor is wider than tall, an optimal target aspect ratio is chosen. An inset rectangle 225 is inscribed within the overall sensor that is best-fit to the maximum boundaries of the sensor given the desired optimal aspect ratio for the given (current) orientation. The boundaries of the sensor are slightly padded in order to provide 'breathing room' for correction. This inset rectangle 225 is transformed to compensate for rotation 220, 230, 240 by essentially rotating in the inverse of the device's own rotation, which is sampled from the device's integrated gyroscope. The transformed inner rectangle 225 is inscribed optimally inside the maximum available bounds of the overall sensor minus the padding. Depending on the device's current most orientation, the dimensions of the transformed inner rectangle 225 are adjusted to interpolate between the two optimal aspect ratios, relative to the amount of rotation.

For example, if the optimal aspect ratio selected for portrait orientation was square (1:1) and the optimal aspect ratio selected for landscape orientation was wide (16:9), the inscribed rectangle would interpolate optimally between 1:1 and 16:9 as it is rotated from one orientation to another. The inscribed rectangle is sampled and then transformed to fit an optimal output dimension. For example, if the optimal output dimension is 4:3 and the sampled rectangle is 1:1, the sampled rectangle would either be aspect filled (fully filling the 1:1 area optically, cropping data as necessary) or aspect fit (fully fitting inside the 1:1 area optically, blacking out any unused area with 'letter boxing' or 'pillar boxing'. In the end the result is a fixed aspect asset where the content framing adjusts based on the dynamically provided aspect ratio during correction. So for example a 16:9 video comprised of 1:1 to 16:9 content would oscillate between being optically filled 260 (during 16:9 portions) and fit with pillar boxing 250 (during 1:1 portions).

Additional refinements whereby the total aggregate of all movement is considered and weighed into the selection of optimal output aspect ratio are in place. For example, if a user records a video that is 'mostly landscape' with a minority of portrait content, the output format will be a landscape aspect ratio (pillar boxing the portrait segments). If a user records a video that is mostly portrait the opposite applies (the video will be portrait and fill the output optically, cropping any landscape content that falls outside the bounds of the output rectangle).

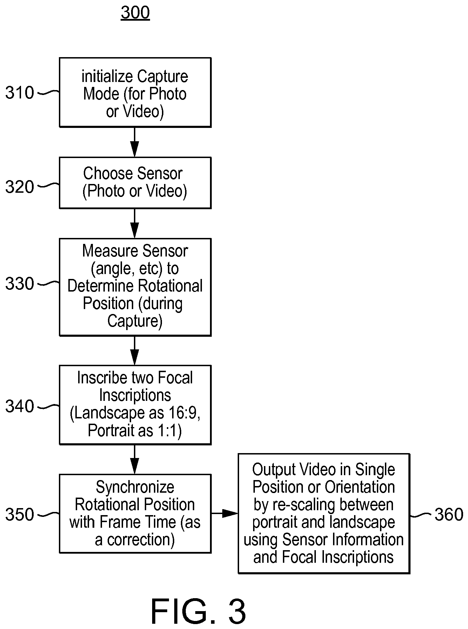

Referring now to FIG. 3, an exemplary process for image stabilization and reframing 300 in accordance with the present disclosure is shown. The system is initialized in response to the capture mode of the camera being initiated. The initialization may be initiated according to a hardware or software button, or in response to another control signal generated in response to a user action. Once the capture mode of the device is initiated, the mobile device sensor 320 is chosen in response to user selections. User selections may be made through a setting on the touch screen device, through a menu system, or in response to how the button is actuated. For example, a button that is pushed once may select a photo sensor, while a button that is held down continuously may indicate a video sensor. Additionally, holding a button for a predetermined time, such as 3 seconds, may indicate that a video has been selected and video recording on the mobile device will continue until the button is actuated a second time.

Once the appropriate capture sensor is selected, the system then requests a measurement from a rotational sensor 320. The rotational sensor may be a gyroscope, accelerometer, axis orientation sensor, light sensor or the like, which is used to determine a horizontal and/or vertical indication of the position of the mobile device. The measurement sensor may send periodic measurements to the controlling processor thereby continuously indicating the vertical and/or horizontal orientation of the mobile device. Thus, as the device is rotated, the controlling processor can continuously update the display and save the video or image in a way which has a continuous consistent horizon.

After the rotational sensor has returned an indication of the vertical and/or horizontal orientation of the mobile device, the mobile device depicts an inset rectangle on the display indicating the captured orientation of the video or image 340. As the mobile device is rotated, the system processor continuously synchronizes inset rectangle with the rotational measurement received from the rotational sensor 350. The user may optionally indicate a preferred final video or image ration, such as 1:1, 9:16, 16:9, or any other ratio selected by the user. The system may also store user selections for different ratios according to orientation of the mobile device. For example, the user may indicate a 1:1 ratio for video recorded in the vertical orientation, but a 16:9 ratio for video recorded in the horizontal orientation. In this instance, the system may continuously or incrementally rescale video 360 as the mobile device is rotated. Thus a video may start out with a 1:1 orientation, but could gradually be rescaled to end in a 16:9 orientation in response to a user rotating from a vertical to horizontal orientation while filming. Optionally, a user may indicate that the beginning or ending orientation determines the final ratio of the video.

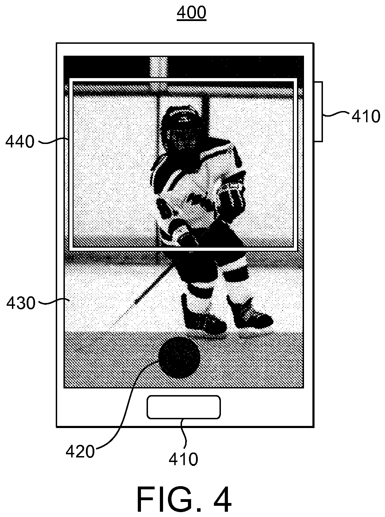

Turning now to FIG. 4, an exemplary mobile device display having a capture initialization 400 according to the present disclosure is shown. An exemplary mobile device is show depicting a touch tone display for capturing images or video. According to an aspect of the present disclosure, the capture mode of the exemplary device may be initiated in response to a number of actions. Any of hardware buttons 410 of the mobile device may be depressed to initiate the capture sequence. Alternatively, a software button 420 may be activated through the touch screen to initiate the capture sequence. The software button 420 may be overlaid on the image 430 displayed on the touch screen. The image 430 acts as a viewfinder indicating the current image being captured by the image sensor. An inscribed rectangle 440, as described previously, may also be overlaid on the image to indicate an aspect ratio of the image or video be captured.

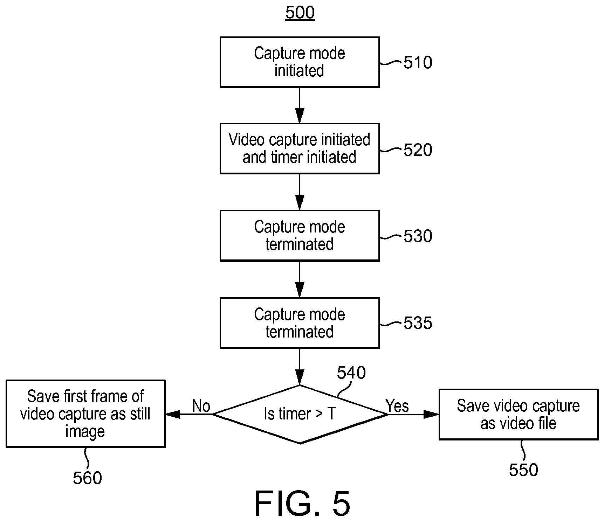

Referring now to FIG. 5, an exemplary process for initiating an image or video capture 500 in accordance with the present disclosure is shown. Once the imaging software has been initiated, the system waits for an indication to initiate image capture. Once the image capture indication has been received by the main processor 510, the device begins to save the data sent from the image sensor 520. In addition, the system initiates a timer. The system then continues to capture data from the image sensor as video data. In response to a second indication from the capture indication, indicating that capture has been ceased 530, the system stops saving data from the image sensor and stops the timer.

The system then compares the timer value to a predetermined time threshold 540. The predetermined time threshold may be a default value determined by the software provider, such as 1 second for example, or it may be a configurable setting determined by a user. If the timer value is less than the predetermined threshold 540, the system determines that a still image was desired and saves 560 the first frame of the video capture as a still image in a still image format, such as jpeg or the like. The system may optionally choose another frame as the still image. If the timer value is greater than the predetermined threshold 540, the system determines that a video capture was desired. The system then saves 550 the capture data as a video file in a video file format, such as mpeg or the like. The system may then return to the initialization mode, waiting for the capture mode to be initiated again. If the mobile device is equipped with different sensors for still image capture and video capture, the system may optionally save a still image from the still image sensor and start saving capture data from the video image sensor. When the timer value is compared to the predetermined time threshold, the desired data is saved, while the unwanted data is not saved. For example, if the timer value exceeds the threshold time value, the video data is saved and the image data is discarded.

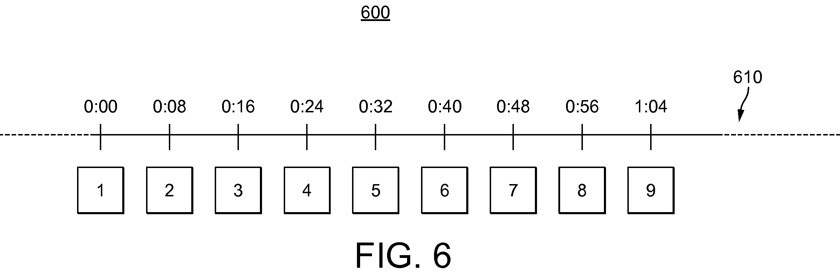

Turning now to FIG. 6, an exemplary embodiment of automatic video segmentation 600 is shown. The system is directed towards automatic video segmentation that aims to compute and output video that is sliced into segments that are as close to a predetermined time interval in seconds as possible. Additionally the segments may be longer or shorter dependant in response to attributes of the video being segmented. For example, it is not desirable to bisect content in an awkward way, such as in the middle of a spoken word. A timeline 610 is shown, depicting a video segmented into nine segments (1-9). Each of the segments is approximately 8 seconds long. The original video has a length of at least 1 minute and 4 seconds.

In this exemplary embodiment, the time interval chosen for each video segment is 8 seconds. This initial time interval may be longer or shorter, or may be optionally configurable by the user. An 8 second base timing interval was chosen as it currently represents a manageable data segment having a reasonable data transmission size for downloading over various network types. An approximately 8 second clip would have a reasonable average duration to expect an end user to peruse a single clip of video content delivered in an exploratory manner on a mobile platform. A clip of approximately 8 seconds may be a perceptually memorable duration of time where an end user can theoretically retain a better visual memory of more of the content it displays. Additionally, 8 seconds is an even phrase length of 8 beats at 120 beats per minute, the most common tempo of modern Western music. This is approximately the duration of a short phrase of 4 bars (16 beats) which is the most common phrase length (duration of time to encapsulate an entire musical theme or section). This tempo is perceptually linked to an average active heart rate, suggesting action and activity and reinforcing alertness. Furthermore, having a small, known size clip facilitates easier bandwidth calculations based upon given that video compression rates and bandwidth are generally computed around base-8 numbers, such as megabits per second, where 8 megabits = 1 megabyte, therefore each segment of video would be around 1 megabyte when encoded at 1 megabits per second.

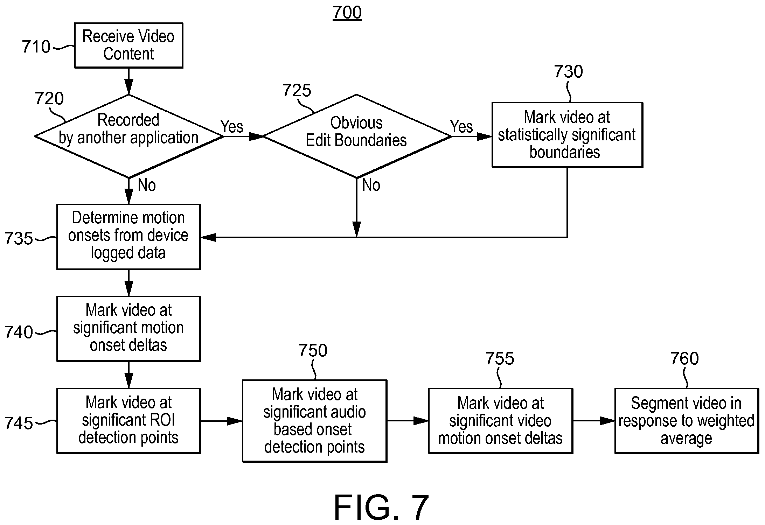

Turning now to FIG. 7, a method of segmenting a video 700 in accordance with the present disclosure is shown. In order to procedurally fragment video content into ideal segments of 8 seconds on perceptually good edit boundaries, a number of approaches to analyzing the video content may be applied within the system. First, an initial determination may made regarding the nature of the video content as to whether it originated from another application or was recorded using the current mobile device 720. If the content originated from another source or application, the video content is analyzed first for obvious edit boundaries using scene break detection 725. Any statistically significant boundaries may be marked, with emphasis on the boundaries on or nearest to the desired 8 second interval 730. If the video content was recorded using the current mobile device, the sensor data may be logged while recording 735. This may include the delta of movement of the device on all axes from the device's accelerometer and/or the rotation of the device on all axes based on the device's gyroscope. This logged data may be analyzed to find motion onsets, deltas that are statistically significant relative to the mean magnitude over time for any given vector. These deltas are logged with emphasis on the boundaries nearest to the desired 8 second interval 740.

The video content can be further perceptually analyzed for additional cues that can inform edit selection. If the device hardware, firmware or OS provides any integrated region of interest (ROI) detection, including face ROI selection, it is utilized to mark any ROIs in the scene 745. The onset appearance or disappearance of these ROIs (i.e. the moments nearest when they appear in frame and disappear from frame) can be logged with emphasis on the boundaries nearest to the desired 8 second interval.

Audio-based onset detection upon overall amplitude will look for statistically significant changes (increases or decreases) in amplitude relative to either the zero crossing, a noise floor or a running average power level 750. Statistically significant changes will be logged with emphasis on those nearest to the desired 8 second interval. Audio-based onset detection upon amplitude within spectral band ranges will rely on converting the audio signal using a FFT algorithm into a number of overlapping FFT bins. Once converted, each bin may be be discreetly analyzed for statistically significant changes in amplitude relative to its own running average. All bins are in turn averaged together and the most statistically significant results across all bands are logged as onsets, with emphasis on those nearest to the desired 8 second interval. Within this method the audio can be pre-processed with comb filters to selectively emphasize/deemphasize bands, for example, the bands in the range of normal human speech can be emphasized whereas high frequency bands synonymous with noise can be deemphasized.

Visual analysis of the average motion within content can be determined for a video content to help establish an appropriate segmentation point 755. At a limited frame resolution and sampling rate as required for real time performance characteristics, the magnitude of the average motion in-frame can be determined and used to look for statistically significant changes over time, logging results with emphasis on those nearest to the desired 8 second interval. Additionally, the average color and luminance of the content can be determined using a simple, low resolution analysis of the recorded data, logging statistically significant changes with emphasis on those nearest to the desired 8 second interval.

Once any or all of the above analysis is completed, the final logged output may be analyzed weighting each result into an overall average 760. This post-processing pass of the analysis data finds the most viable points in time based on the weighted and averaged outcome of all individual analysis processes. The final, strongest average points on or nearest the desired 8 second interval are computed as output that forms the model for fragmentation edit decisions.

The post processing step 760 may consider any or all of the previously mentioned marked points on the video as indicators of preferred segmentation points. The different determination factors can be weighted. Also, determination points that vary too far from the preferred segment length, such as 8 seconds, may be weighted lower than those closest to the preferred segment length.

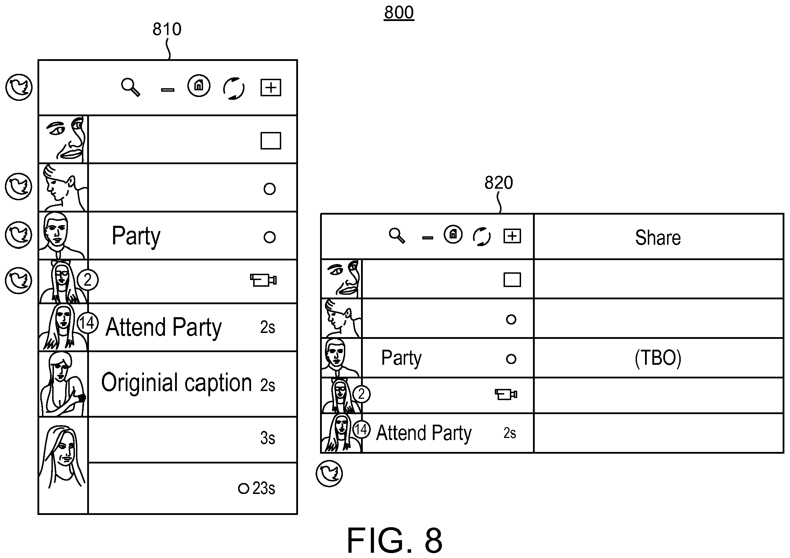

Turning now to FIG. 8, a light box application 800 according to one aspect of the present disclosure is shown. The light box application is directed towards a method and system for using a list-driven selection process to improve video and media time-based editing. The light box application is shown in both the vertical 810 and the horizontal orientation 820. The light box application may be initiated after a segmented video has been saved. Alternatively, the light box application may be initiated in response to a user command. Each of the segments is initially listed chronologically with a preview generated for each. The preview may be a single image taken from the video segment or a portion of the video segment. Additional media content or data can be added to the light box application. For example, photos or videos received from other sources may be included in the light box list to permit a user to share or edit the received content or combine these received contents with newly generated content. Thus, the application permits video and media time-based editing into a simple list driven selection process.

The light box application may be used as a center point for sharing editorial decisions. The light box allows users to quickly and easily view content and decide what to keep, what to discard, and how and when to share with others. The light box function may work with the camera, with channel browsing or as a point to import media from other places. The light box view may contain a list of recent media or grouped sets of media. Each item, image or video, is displayed as at thumbnail, with a caption, aduration, and a possible group count. The caption may be generated automatically or by the user. The duration may be simplified, so as to present to the user the weight and pace of the media content. The light box title bar may include the category of the light box set with its item count, along with navigation to go back, import an item, or open a menu.

The light box landscape view 820 offers a different layout, with media items listed on one side and optionally, a method of sharing in some immediately assessable form on the other side. This may include links or previews of facebook, twitter, or other social media applications.

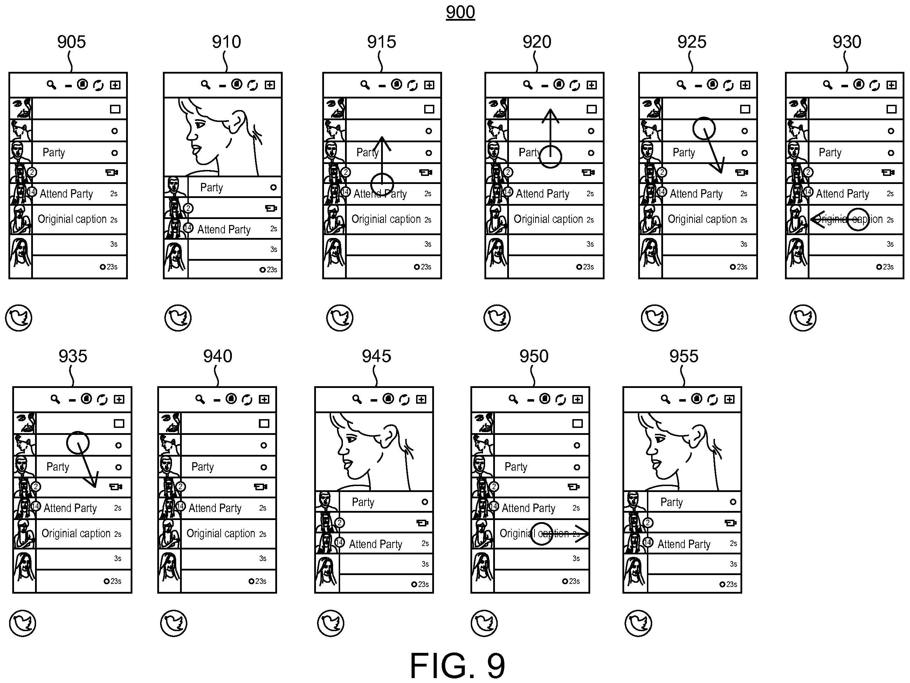

Turning now to FIG. 9, various exemplary operations 900 that can performed within the light box application are shown. Media that is captured, by an integrated camera feature for example, imported from the device's existing media library, possibly recorded with or created by other applications or downloaded from web based sources, or curated from content published directly within the related application is all collected into the light box in a preview mode 905. The light box presents media in a simple vertical list, categorized into groups based on events, such as groupings of time, within which the media was collected. Each item is represented by a list row including a thumbnail or simplified duration for the given piece of media. By tapping on any item the media can be previewed in an expanded panel that displays in direct relation to the item.

The light box application may optionally have an expanded items view 910, which previews the item. The expanded items view 910 exposes options to processing the media item, captioning, and sharing it. Tapping the close button closes the item or tapping another item below it closes the item and opens another.

Scrolling up or down within the light box application permits the user to navigate the media items 915. The header may remain at the top of the list, or it may float atop the content. Scrolling to the end of a list may enable navigation to other, older lists 920. The headings of the older lists may be revealed under tension while dragging. Dragging past tension transitions to the older lists. Holding and dragging on an item allows the user to reorder items or combine items by dragging one onto another 925. Swiping an item to the left removes the item from the light box 930. Removing items may or may not remove them from the device, not just the light box application. Dragging and dropping items onto other items may be used to combine the items into a group 935, or combine the dragged item into a group. Pinching items together combines all items that were within the pinch rage into a group 940. When previewing combined items, they play sequentially and show an item count that can be tapped to expand the combined items below the preview window 945. The regular light box items may then be pushed down to permit the expanded items to be displayed as rows.

Items can be manipulated by dragging on them from within the light box application. Items can be removed from the light box application by dragging left on any item the item for example 930. By dragging right on any item, the item can be promoted to publish immediately 950, which transitions to a screen allowing the user to share the given item's media on one or many sharing locations 955. Tapping a share button when previewing may also enable the sharing of an item. By pressing holding on any item it becomes draggable, at which point the item can be dragged up and down to re-organize its position in the overall list. Time in the list is represented vertically, top-to-bottom. For example, the top most item is first in time were the media to be performed sequentially. Any whole group of items (kept under a single event heading) can be collectively previewed (played sequentially as a single preview comprised of all items in order of time), can be collectively deleted or published using the same gestures and means of control as a single list item. When previewing any item that contains video or time-based media, playback can be controlled by dragging left-to-right on the related list item row. The current position in time is marked by a small line that can be dragged to offset time during playback by the user. When previewing any item that contains video or time-based media, by pinching with two fingers horizontally upon the related list item row a selection range is defined which can be pinched and dragged in order to trim the original media as the final playback output. When previewing any item that contains an image or still media, by dragging left-to-right or right-to-left on the related list item row any additional adjacent frames captured can be selectively 'scrubbed'. For example if during a single photo capture the camera records several frames of output, this gesture can allow the user to cycle through and select the best frame as the final still frame.

Items that have recently been published (uploaded to one or many publishing destinations) are automatically cleared from the light box list. Items that time out, or live in the light box for longer than a prolonged inactivity period, such as several days, are automatically cleared from the light box list. The light box media is built upon a central, ubiquitous storage location on the device so that other applications who incorporate the same light box view all share from the same current pool of media. This makes multi-application collaboration on multimedia asset editing simple and synchronous.

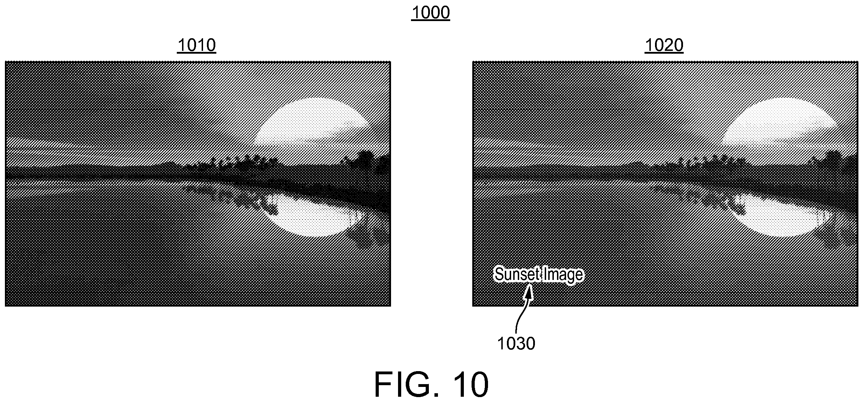

Turning now to FIG. 10, an exemplary caption color generation application 1000 according to one aspect of the present disclosure is shown. One view shows the original image 1010 on which a user wishes to overlay a caption. The caption may be generated through user input, or generated automatically by the application. The application may

Turning now to FIG. 10, an exemplary caption color generation application 1000 according to one aspect of the present disclosure is shown. One view shows the original image 1010 on which a user wishes to overlay a caption. The caption may be generated through user input, or generated automatically by the application. The application may recognize the content of the image, may search the internet or a database for similar images and examine metadata or captions associated with that similar image to generate the text of the caption. The second view shows an altered image 1020 with a caption 1030 overlaid on the image. The color of the caption has been chosen to contrast with the image in such a way as to be pleasing to the eye, but still make the caption legible to a viewer.

The exemplary caption color generation application 1000 uses an algorithm which determines the color most prominent in an image. The predominant color is the color most frequently used in an image. A dominant color is a color that has more influence in an image and therefore appears to a viewer as the defining color of an image. For example, if an image is mostly black but has a large red shape displayed, a viewer might define the image as mostly red, when in fact the predominant color is black. Thus, the dominant color and the predominant color may not be the same. In this exemplary embodiment, red is the dominant color in the image. The system may determine this color prominence in a number of different ways. The system may take an average of the colors in the image and select a caption color in response to this average and select this as the predominant color. The image may look for the most commonly used color and select this as the predominant color. The application may then use the predominant color as the caption color or select one of a discrete number of predetermined colors.

system may not want to use black or white, or any pastel colors. Alternatively, the system may be operative to match the predominant color with a recessive color. A recessive color, unlike a dominant color, fades into the background. These recessive colors, such as lavender, pink or gray, take on the properties of surrounding color. Contrasting recessive colors may be more desirable than dominant colors as they permit the caption to be read, but do not distract from the image or video they are overlaid upon. Once a match is made, the caption or text is overlaid in the matched color.

The system may then select a location to display the caption. The caption may be displayed in a default location, such as the lower left, or the caption may be placed after an analysis of the color locations of the image. In the case of the default location, the system may determine the predominant color proximate to the default location within the image or video. Thus, the caption would still have the desired level of contrast between the image and the caption text. It should be understood that displaying an image and a caption could mean displaying on a display screen or generating a signal suitable for coupling to a display device.

Alternatively, the system may wish to use the same color of caption for a series or group of images or for a video. In this case, the system may analyze each image for a predominant color and then take the most common predominant color and use this most common predominant color as the text color for the caption overlaid on all the images. The system may determine a location within the series of images which has the smallest color variation over all the frames or a number of frames. This location may be selected as the location to place the caption. The predominant color of this location within all the series of images would then be analyzed to select a text color according to previously described method. The text color would be used to display the caption in the location on all images or video frames.

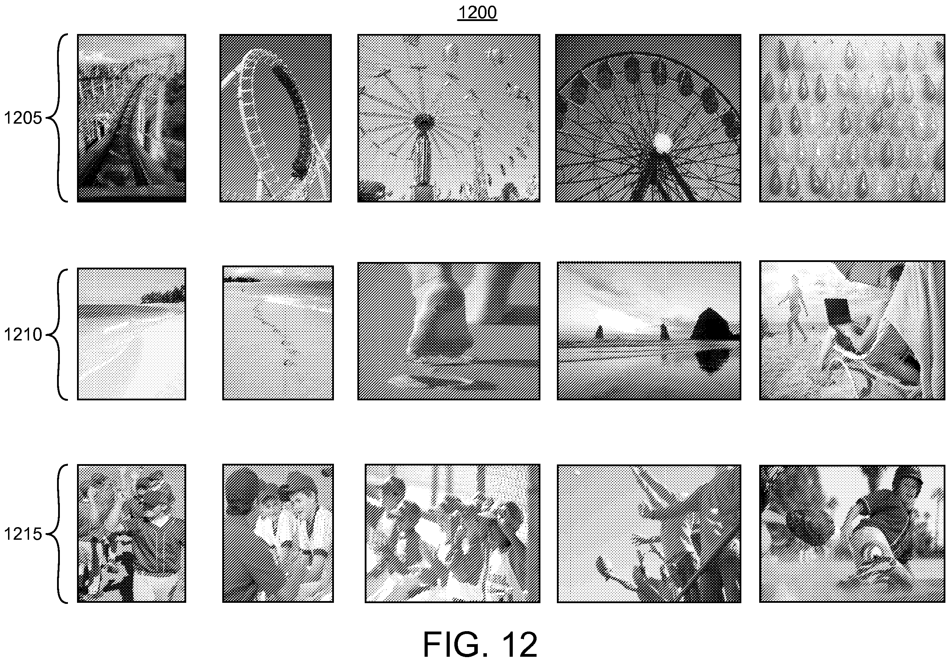

Referring now to FIG. 12, a collection of images 1200 is shown. The images 1200 are captured using the camera function 140 of the phone 100. A user may wish to create groups of images to be shared, for example, with friends and family. The groups of images may be selected by the user or may be automatically created by the processor 150 utilizing information stored in memory 160 and/or information provided by the interfaces 110, 120, 130, GPS functions, clock functions, and the like. Some exemplary methods for automatically grouping images may include grouping images based on timestamps or dates stored with the captured images 1200 in memory 160 by processor 150, grouping images based on location information provided by a GPS function and stored with the captured images 1200 in memory 160 by processor 150, grouping the images by visual attributes (e.g., colors, objects, brightness, etc.) of the images as identified by the processor executing image processing techniques on the images 1200 stored in memory 160, grouping the images after the processor 150 compares each image in the collection of images 1200 to databases of images accessed via the interfaces 110, 120, 130. In the example shown in FIG. 12, the collection of images 1200 are segmented or grouped (either by the user or by an automated process) into three groups of images 1205, 1210, 1215. These groups of images 1205, 1210, 1215 may represent a number of activities that the user engaged in over a period of time (e.g., activities the user engaged in over a day, week, month, season, lifetime, etc.). For example, the first group of images 1205 may be images captured at an amusement park or multiple amusement parks. The second group of images 1210 may be images captured at a beach or multiple beaches. The third group of images 1215 may be images captured at a baseball game or multiple baseball games. As discussed above, it should be appreciated that these groups of images 1205, 1210, 1215 could be created by the user by, for example, the user providing instructions to processor 150 via touch screen 170 or be created automatically by the processor 150 based on, for example, at least one of time, date, location, visual attribute data, or image comparison data. It should also be appreciated that each group of images may also be a video or group of videos.

When a user provides (e.g., displays, e-mails, posts on a social network, etc.) the collection of images 1200 to, for example, friends and family for viewing, it may be useful if each group of images 1205, 1210, 1215 is affiliated in some way in addition to the content of the images themselves. This would help to unify each group of images 1205, 1210, 1215 to a viewer, yet distinguish each group of images 1205, 1210, 1215 in the larger collection of images 1200. In other words, it would be helpful to help a viewer understand that the viewer is moving from one set of pictures to another set of pictures when the user shifts her or her viewing between each group of images 1205, 1210, 1215. The present disclosure is directed towards providing such a unification of groups of images by providing different colored text for each group of images.

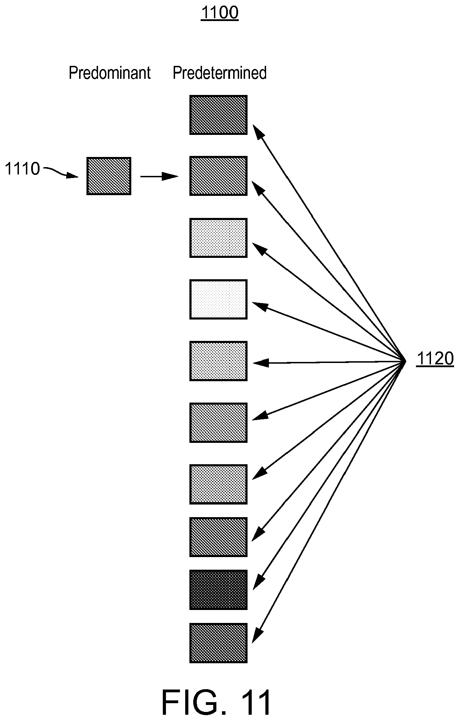

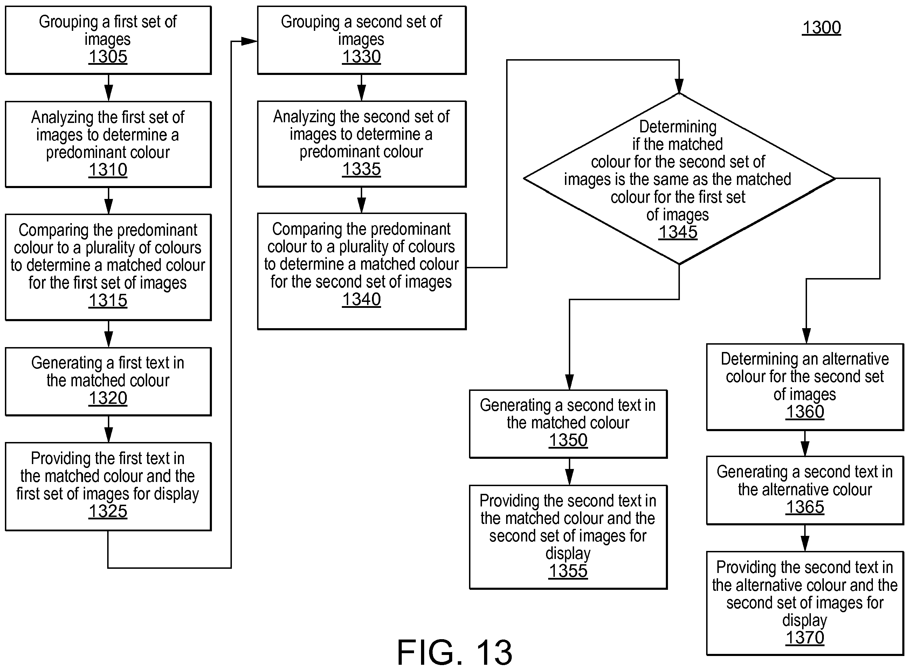

Referring now to FIG. 13, an exemplary process 1300 for generating text colors for groups of images is shown. Initially, processor 150, at step 1305, groups a first set of images together (e.g., group of images 1205). As discussed above, this grouping or segmenting could be done manually by the user providing instructions to processor 150 via touch screen 170 or automatically by the processor 150 using time, date, location, visual attribute data, image comparison data, or the like, as known by one skilled in the art. Next, at step 1310, processor 150 analyzes the first set of images to determine a predominant color in the first set of images. This analysis is similar to the predominant color analysis previously described and shown in FIG. 10. Then, at step 1315, processor 150 compares the predominant color for the first set of images to a plurality of colors to determine a matched color for the first set of images. This determination of a matched color is similar to the color matching process previously described and shown in FIG. 11. Once the matched color is determined, a first text (e.g., titles, names, locations, etc.) in the matched color is generated, at step 1320, and provided, at step 1325, with the first set of images for display. Providing for display includes, but is not limited to, displaying on touch screen 170, storing in memory 160, or transmitting (e.g., emailing, posting, etc.) via interfaces 110, 120, 130 or via I/O 180, as known by those skilled in the art. Afterwards, at step 1330, processor 150 groups a second set of images together (e.g., group of images 1210). As discussed above, the grouping or segmenting could be done manually by the user providing instructions to processor 150 via touch screen 170 or automatically by the processor 150 using time, date, location, visual attribute data, image comparison data, or the like, as known by one skilled in the art. Next, at step 1335, processor 150 analyzes the second set of images to determine a predominant color in the second set of images. This analysis is similar to the predominant color analysis previously described and shown in FIG. 10. Then, at step 1340, processor 150 compares the predominant color for the second set of images to a plurality of colors to determine a matched color for the second set of images. This determination of a matched color is similar to the color matching process previously described and shown in FIG. 11. Next, at step 1345, processor 150 determines if the matched color for the second set of images is the same as the matched color for the first set of images. If the matched color for the second set of images is not the same as the matched color for the first set of images, processor 150, at step 1350, generates a second text (e.g., titles, names, locations, etc.) in the matched color and, at step 1355, provides the second text in the matched color with the second set of images for display. Providing for display includes, but is not limited to, displaying on touch screen 170, storing in memory 160, or transmitting (e.g., emailing, posting, etc.) via interfaces 110, 120, 130 or via I/O 180, as known by those skilled in the art. If the matched color for the second set of images is the same as the matched color for the first set of images, processor 150, at step 1360, determines an alternative color for the second set of images. Determining an alternative color may include, for example, selecting the next closest predominant color in the second set of images, selecting the second closest match amongst the available discrete number of predetermined colors, or some combination of the two selection processes. Once the alternative color is determined, processor 150, at step 1365, generates a second text (e.g., titles, names, locations, etc.) in the alternative color and, at step 1370, provides the second text in the alternative color with the second set of images for display. Providing for display includes, but is not limited to, displaying on touch screen 170, storing in memory 160, or transmitting (e.g., emailing, posting, etc.) via interfaces 110, 120, 130 or via I/O 180, as known by those skilled in the art. It should be appreciated that process 1300 can continue if colored text is needed for additional sets of images (e.g., group of images 1215).

It should be understood that the elements shown and discussed above, may be implemented in various forms of hardware, software or combinations thereof. Preferably, these elements are implemented in a combination of hardware and software on one or more appropriately programmed general-purpose devices, which may include a processor, memory and input/output interfaces. The present description illustrates the principles of the present disclosure. It will thus be appreciated that those skilled in the art will be able to devise various arrangements that, although not explicitly described or shown herein, embody the principles of the disclosure and are included within its scope. All examples and conditional language recited herein are intended for informational purposes to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof. Thus, for example, it will be appreciated by those skilled in the art that the block diagrams presented herewith represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

## Claims

1. A method comprising the steps of:
grouping (1305) a first set of images;
analyzing (1310) the first set of images to determine a predominant color;
comparing (1315) the predominant color to a plurality of colors to determine a matched color for the first set of images;
generating (1320) a first text in the matched color;
providing (1325) the first text in the matched color with the first set of images for display;
grouping (1330) a second set of images;
analyzing (1335) the second set of images to determine a predominant color;
comparing (1340) the predominant color to a plurality of colors to determine a matched color for the second set of images;
determining (1345) if the matched color for the second set of images is the same as the matched color for the first set of images;
generating (1365) a second text in an alternative color for the second set of images if it is determined that the matched color for the second set of images is the same as the matched color for the first set of images, wherein said alternative color is determined by selecting the second closest color matching the predominant color in the second set of images, amongst the plurality of colors; and
providing (1370) the second text in the alternative color with the second set of images for display.

2. The method of claim 1, further comprising the steps of:
generating (1350) a second text in the matched color for the second set of images if it is determined that the matched color for the second set of images is different than the matched color for the first set of images; and
providing (1355) the second text in the matched color with the second set of images for display.

3. The method of claim 1, wherein the step of providing includes at least one of displaying, storing for display, and transmitting for display.

4. The method of claim 1, wherein the step of grouping is in response to a user input.

5. The method of claim 1, wherein the step of grouping includes using at least one of time data, date data, location data, visual attribute data, and image comparison data to facilitate the grouping of the first set of images.

6. The method of claim 1, wherein the matched color is at least one of the predominant color or a dominant color.

7. The method of claim 1, wherein the matched color is a recessive color.

8. The method of claim 1, wherein the first set of images is a video.

9. An apparatus comprising:
a memory (160) that stores a collection of images; and
a processor (150) that groups a first set of images from the stored collection of images, analyzes the first set of images to determine a predominant color, compares the predominant color to a plurality of colors to determine a matched color for the first set of images, generates a first text in the matched color; provides the first text in the matched color with the first set of images for display, groups a second set of images, analyzes the second set of images to determine a predominant color, compares the predominant color to a plurality of colors to determine a matched color for the second set of images, determines if the matched color for the second set of images is the same as the matched color for the first set of images, generates a second text in an alternative color for the second set of images if it is determined that the matched color for the second set of images is the same as the matched color for the first set of images, wherein said alternative color is determined by selecting the second closest color matching the predominant color in the second set of images, amongst the plurality of colors, and provides the second text in the alternative color with the second set of images for display.

10. The apparatus of claim 9, wherein the processor (150) generates a second text in the matched color for the second set of images if it is determined that the matched color for the second set of images is different than the matched color for the first set of images, and provides the second text in the matched color with the second set of images for display.

11. The apparatus of claim 9, wherein the processor (150) provides the first text in the matched color with the first set of images for display by at least one of displaying, storing for display, and transmitting for display the first text in the matched color with the first set of images.

12. The apparatus of claim 9, wherein the processor (150) groups the first set of images in response to a user input and the matched color is a recessive color.

13. The apparatus of claim 9, wherein the processor (150) groups the first set of images using at least one of time data, date data, location data, visual attribute data, and image comparison data.

14. The apparatus of claim 9, wherein the matched color is at least one of the predominant color or a dominant color.

15. A computer program product, **characterized in that** it comprises instructions of program code for executing steps of the method according to one of claims 1 to 8, when said program is executed on a computer.

## Patentansprüche

1. Verfahren, das die folgenden Schritte umfasst:
Gruppieren (1305) eines ersten Bildsatzes;
Analysieren (1310) des ersten Bildsatzes zum Bestimmen einer vorherrschenden Farbe;
Vergleichen (1315) der vorherrschenden Farbe mit einer Vielzahl von Farben zum Bestimmen einer abgeglichenen Farbe für den ersten Bildsatz;
Erzeugen (1320) eines ersten Texts in der abgeglichenen Farbe;
Bereitstellen (1325) des ersten Texts in der abgeglichenen Farbe mit dem ersten Bildsatz zur Anzeige;
Gruppieren (1330) eines zweiten Bildsatzes;
Analysieren (1335) des zweiten Bildsatzes zum Bestimmen einer vorherrschenden Farbe;
Vergleichen (1340) der vorherrschenden Farbe mit einer Vielzahl von Farben zum Bestimmen einer abgeglichenen Farbe für den zweiten Bildsatz;
Bestimmen (1345), ob die abgeglichene Farbe für den zweiten Bildsatz dieselbe wie die abgeglichene Farbe für den ersten Bildsatz ist;
Erzeugen (1365) eines zweiten Texts in einer alternativen Farbe für den zweiten Bildsatz, wenn bestimmt wird, dass die abgeglichene Farbe für den zweiten Bildsatz dieselbe wie die abgeglichene Farbe für den ersten Bildsatz ist, wobei die alternative Farbe durch Auswählen der zweitnächsten Farbe, die mit der vorherrschenden Farbe in dem zweiten Bildsatz abgeglichen ist, aus der Vielzahl von Farben bestimmt wird; und
Bereitstellen (1370) des zweiten Texts in der alternativen Farbe mit dem zweiten Bildsatz zur Anzeige.

2. Verfahren nach Anspruch 1, das ferner die folgenden Schritte umfasst:
Erzeugen (1350) eines zweiten Texts in der abgeglichenen Farbe für den zweiten Bildsatz, wenn bestimmt wird, dass die abgeglichene Farbe für den zweiten Bildsatz anders als die abgeglichene Farbe für den ersten Bildsatz ist; und
Bereitstellen (1355) des zweiten Texts in der abgeglichenen Farbe mit dem zweiten Bildsatz zur Anzeige.

3. Verfahren nach Anspruch 1, wobei der Schritt des Bereitstellens wenigstens eines von Anzeigen, Speichern zur Anzeige und Übertragen zur Anzeige einschließt.

4. Verfahren nach Anspruch 1, wobei der Schritt des Gruppierens als Reaktion auf eine Benutzereingabe erfolgt.

5. Verfahren nach Anspruch 1, wobei der Schritt des Gruppierens ein Verwenden von wenigstens einem von Zeitdaten, Datendaten, Ortsdaten, visuellen Attributdaten und Bildvergleichsdaten einschließt, um das Gruppieren des ersten Bildsatzes zu unterstützen.

6. Verfahren nach Anspruch 1, wobei die abgeglichene Farbe wenigstens eines von der vorherrschenden Farbe oder einer dominanten Farbe ist.

7. Verfahren nach Anspruch 1, wobei die abgeglichene Farbe eine rezessive Farbe ist.

8. Verfahren nach Anspruch 1, wobei der erste Bildsatz ein Video ist.

9. Einrichtung, umfassend:
einen Speicher (160), der eine Bildsammlung speichert; und
einen Prozessor (150), der einen ersten Bildsatz aus der gespeicherten Bildsammlung gruppiert, den ersten Bildsatz analysiert, um eine vorherrschende Farbe zu bestimmen, die vorherrschende Farbe mit einer Vielzahl von Farben vergleicht, um eine abgeglichene Farbe für den ersten Bildsatz zu bestimmen, einen ersten Text in der abgeglichenen Farbe erzeugt, den ersten Text in der abgeglichenen Farbe mit dem ersten Bildsatz zur Anzeige bereitstellt, einen zweiten Bildsatz gruppiert, den zweiten Bildsatz analysiert, um eine vorherrschende Farbe zu bestimmen, die vorherrschende Farbe mit einer Vielzahl von Farben vergleicht, um eine abgeglichene Farbe für den zweiten Bildsatz zu bestimmen, bestimmt, ob die abgeglichene Farbe für den zweiten Bildsatz dieselbe wie die abgeglichene Farbe für den ersten Bildsatz ist, einen zweiten Text in einer alternativen Farbe für den zweiten Bildsatz erzeugt, wenn bestimmt wird, dass die abgeglichene Farbe für den zweiten Bildsatz dieselbe wie die abgeglichene Farbe für den ersten Bildsatz ist, wobei die alternative Farbe durch Auswählen der zweitnächsten Farbe, die mit der vorherrschenden Farbe in dem zweiten Bildsatz abgeglichen ist, aus der Vielzahl von Farben bestimmt wird, und den zweiten Text in der alternativen Farbe mit dem zweiten Bildsatz zur Anzeige bereitstellt.

10. Einrichtung nach Anspruch 9, wobei der Prozessor (150) einen zweiten Text in der abgeglichenen Farbe für den zweiten Bildsatz erzeugt, wenn bestimmt wird, dass die abgeglichene Farbe für den zweiten Bildsatz anders als die abgeglichene Farbe für den ersten Bildsatz ist, und den zweiten Text in der abgeglichenen Farbe mit dem zweiten Bildsatz zur Anzeige bereitstellt.

11. Einrichtung nach Anspruch 9, wobei der Prozessor (150) den ersten Text in der abgeglichenen Farbe mit dem ersten Bildsatz zur Anzeige durch wenigstens eines von Anzeigen, Speichern zur Anzeige und Übertragen zur Anzeige des ersten Texts in der abgeglichenen Farbe mit dem ersten Bildsatz bereitstellt.

12. Einrichtung nach Anspruch 9, wobei der Prozessor (150) den ersten Bildsatz als Reaktion auf eine Benutzereingabe gruppiert und die abgeglichene Farbe eine rezessive Farbe ist.

13. Einrichtung nach Anspruch 9, wobei der Prozessor (150) den ersten Bildsatz unter Verwendung von wenigstens einem von Zeitdaten, Datendaten, Ortsdaten, visuellen Attributdaten und Bildvergleichsdaten gruppiert.

14. Einrichtung nach Anspruch 9, wobei die abgeglichene Farbe wenigstens eine von der vorherrschenden Farbe oder einer dominanten Farbe ist.

15. Computerprogrammprodukt, **dadurch gekennzeichnet, dass** es Anweisungen vom Programmcode zum Ausführen von Schritten des Verfahrens nach einem der Ansprüche 1 bis 8 umfasst, wenn das Programm auf einem Computer ausgeführt wird.

## Revendications

1. Procédé comprenant les étapes consistant à :
regrouper (1305) un premier ensemble d'images ;
analyser (1310) le premier ensemble d'images pour déterminer une couleur prédominante ;
comparer (1315) la couleur prédominante à une pluralité de couleurs pour déterminer une
couleur concordante pour le premier ensemble d'images ;
générer (1320) un premier texte dans la couleur concordante ;
fournir (1325) le premier texte dans la couleur concordante avec le premier ensemble d'images pour affichage ;
regrouper (1330) un deuxième ensemble d'images ;
analyser (1335) le deuxième ensemble d'images pour déterminer une couleur prédominante ;
comparer (1340) la couleur prédominante à une pluralité de couleurs pour déterminer une couleur concordante pour le deuxième ensemble d'images ;
déterminer (1345) si la couleur concordante pour le deuxième ensemble d'images est la même que la couleur concordante pour le premier ensemble d'images ;
générer (1365) un deuxième texte dans une autre couleur pour le deuxième ensemble d'images s'il est déterminé que la couleur concordante pour le deuxième ensemble d'images est la même que la couleur concordante pour le premier ensemble d'images, où ladite autre couleur est déterminée en sélectionnant la deuxième couleur la plus proche de la couleur prédominante dans le deuxième ensemble d'images, parmi la pluralité de couleurs ; et
fournir (1370) le deuxième texte dans l'autre couleur avec le deuxième ensemble d'images pour affichage ;

2. Procédé selon la revendication 1, comprenant en outre les étapes consistant à :
générer (1350) un deuxième texte dans la couleur concordante pour le deuxième ensemble d'images s'il est déterminé que la couleur concordante pour le deuxième ensemble d'images est différente de la couleur concordante pour le premier ensemble d'images ; et
fournir (1355) le deuxième texte dans la couleur concordante avec le deuxième ensemble d'images pour affichage ;

3. Procédé selon la revendication 1, dans lequel l'étape de fourniture comprend au moins
l'affichage, le stockage pour affichage ou la transmission pour affichage.

4. Procédé selon la revendication 1, dans lequel l'étape de regroupement est effectuée en réponse à une entrée utilisateur.

5. Procédé selon la revendication 1, dans lequel l'étape de regroupement comprend l'utilisation d'au moins des données de temps, des données de date, des données de localisation, des données d'attributs visuels ou des données de comparaison d'images pour faciliter le regroupement du premier ensemble d'images.

6. Procédé selon la revendication 1, dans lequel la couleur concordante est au moins la couleur prédominante ou une couleur dominante.

7. Procédé selon la revendication 1, dans lequel la couleur concordante est une couleur récessive.

8. Procédé selon la revendication 1, dans lequel le premier ensemble d'images est une vidéo.

9. Appareil comprenant :
une mémoire (160) qui stocke une collection d'images ; et
un processeur (150) qui regroupe un premier ensemble d'images à partir de la collection d'images stockée, analyse le premier ensemble d'images pour déterminer une couleur prédominante, compare la couleur prédominante à une pluralité de couleurs pour déterminer une couleur concordante pour le premier ensemble d'images, génère un premier texte dans la couleur concordante, fournit le premier texte dans la couleur concordante avec le premier ensemble d'images pour affichage, regroupe un deuxième ensemble d'images, analyse le deuxième ensemble d'images pour déterminer une couleur prédominante, compare la couleur prédominante à une pluralité de couleurs pour déterminer une couleur concordante pour le deuxième ensemble d'images, détermine si la couleur concordante pour le deuxième ensemble d'images est la même que la couleur concordante pour le premier ensemble d'images, génère un deuxième texte dans une autre couleur pour le deuxième ensemble d'images s'il est déterminé que la couleur concordante pour le deuxième ensemble d'images est la même que la couleur concordante pour le premier ensemble d'images, où ladite autre couleur est déterminée en sélectionnant la deuxième couleur la plus proche de la couleur prédominante dans le deuxième ensemble d'images, parmi la pluralité de couleurs, et fournit le deuxième texte dans l'autre couleur avec le deuxième ensemble d'images pour affichage.

10. Appareil selon la revendication 9, dans lequel le processeur (150) génère un deuxième texte dans la couleur concordante pour le deuxième ensemble d'images s'il est déterminé que la couleur concordante pour le deuxième ensemble d'images est différente de la couleur concordante pour le premier ensemble d'images, et fournit le deuxième texte dans la couleur concordante avec le deuxième ensemble d'images pour affichage.

11. Appareil selon la revendication 9, dans lequel le processeur (150) fournit le premier texte dans la couleur concordante avec le premier ensemble d'images pour affichage au moins en affichant, en stockant pour afficher ou en transmettant pour afficher le premier texte dans la couleur concordante avec le premier ensemble d'images.

12. Appareil selon la revendication 9, dans lequel le processeur (150) regroupe le premier ensemble d'images en réponse à une entrée utilisateur et la couleur concordante est une couleur recessive.

13. Appareil selon la revendication 9, dans lequel le processeur (150) regroupe le premier ensemble d'images à l'aide au moins de données de temps, de données de date, de données de localisation, de données d'attributs visuels ou de données de comparaison d'images.

14. Appareil selon la revendication 9, dans lequel la couleur concordante est au moins la couleur prédominante ou une couleur dominante.

15. Produit de programme informatique, **caractérisé en ce qu'**il comprend des instructions de code de programme permettant d'exécuter les étapes du procédé selon l'une des revendications 1 à 8, lorsque ledit programme est exécuté sur un ordinateur.
